# DEMANDE DE BREVET EUROPEEN

(11) **EP 1 338 438 A1**
(43) Date de publication de la demande: **27.08.2003**
(21) Numéro de dépôt: 03290410.4
(22) Date de dépôt: 19.02.2003
(51) Int. Cl.: B60B 17/00

(54) **Roue pour véhicule ferroviaire à capacité de refroidissement accrue**

(30) Priorité: 20.02.2002 FR 0202174
(71) Demandeur: VALDUNES, 78180 Montigny-le-Bretonneux (FR)
(72) Inventeur: Broucke, Jacques, 59210 Coudekerque Branche (FR); Flament, Yves, 59240 Dunkerque (FR); Demilly, Francois, 59240 Dunkerque (FR)
(74) Mandataire: Bouget, Lucien

(57) **Abrégé**

La roue comporte une jante (2), un moyeu (3) et une toile (4) joignant la jante (2) et le moyeu (3), de révolution autour d'un axe de roulement (5). Un élément de refroidissement (6) de forme générale annulaire est fixé sur au moins une surface interne (2c) de la jante (2) dirigée vers une partie centrale de la roue traversée par l'axe de roulement (5), de manière à présenter une surface d'échange thermique avec l'atmosphère en saillie par rapport à la jante (2) et dirigée vers la partie centrale traversée par l'axe de roulement (5).

## Description

L'invention concerne une roue pour un véhicule ferroviaire ayant une capacité de refroidissement accrue.

Les roues pour véhicule ferroviaire comprennent généralement une jante, un moyeu et une toile en forme de disque, par exemple plane ou, au contraire, courbe ou ondulée, joignant la jante et le moyeu.

La roue est de révolution autour de l'axe de roulement passant à travers la partie centrale du moyeu qui permet le montage de la roue sur un essieu. La jante qui est reliée au moyeu par l'intermédiaire de la toile constitue une partie élargie de la roue par rapport à la toile qui comporte une surface externe de roulement de la roue sur un rail et au moins une surface interne de raccordement à la toile dirigée vers l'axe de roulement.

Lors du roulement et plus particulièrement lors d'un freinage de la roue pour assurer un maintien de la vitesse du véhicule ferroviaire, on observe un échauffement de la roue dont la température peut atteindre des niveaux relativement élevés, en fonction de l'utilisation du système de freinage.

Lors d'un freinage, le frottement de semelles de frein sur la surface de roulement de la jante produit de la chaleur qui est injectée sous la forme d'un flux de chaleur dans la jante de la roue. Le flux de chaleur est responsable de l'élévation de la température de la jante qui peut être importante.

Cette élévation de température affecte les propriétés mécaniques de la jante.

De plus, l'élévation importante de la température de la jante interdit l'utilisation de semelles de frein à haut coefficient de frottement et à bas point de fusion. On ne peut donc utiliser des systèmes de freinage présentant une efficacité optimale.

Dans le cas de roues comportant des disques de frein qui sont fixés contre la toile, la chaleur de freinage peut être également transmise à la jante par l'intermédiaire de la toile.

Il est donc souhaitable de disposer d'un système de refroidissement de la jante d'une roue de véhicule ferroviaire qui permette de limiter la température maximale de la jante atteinte lors du freinage.

Le but de l'invention est donc de proposer une roue pour véhicule ferroviaire à capacité de refroidissement accrue, comprenant une jante, un moyeu et une toile joignant la jante et le moyeu, de révolution autour de l'axe de roulement, cette roue permettant de limiter l'échauffement de la jante sur la roue en service, en particulier lors d'un freinage.

Dans ce but, un élément de refroidissement, de forme générale annulaire, est fixé sur une surface interne de la jante dirigée vers une partie centrale de la roue traversée par l'axe de roulement, de manière à présenter une surface d'échange thermique avec l'atmosphère en saillie par rapport à la jante et dirigée vers la partie centrale traversée par l'axe de roulement.

Afin de bien faire comprendre l'invention, on va maintenant décrire, à titre d'exemple, en se référant aux figures jointes en annexe, un mode de réalisation d'une roue de véhicule ferroviaire suivant l'invention.

La figure 1 est une vue en perspective et en coupe par un plan axial d'une roue de véhicule ferroviaire suivant l'invention.

La figure 2 est une vue en coupe par un plan axial de la jante et d'une partie externe de la toile, de la roue représentée sur la figure 1.

La figure 3 est une vue en perspective partielle d'un détail de l'élément de refroidissement de la roue représentée sur les figures 1 et 2.

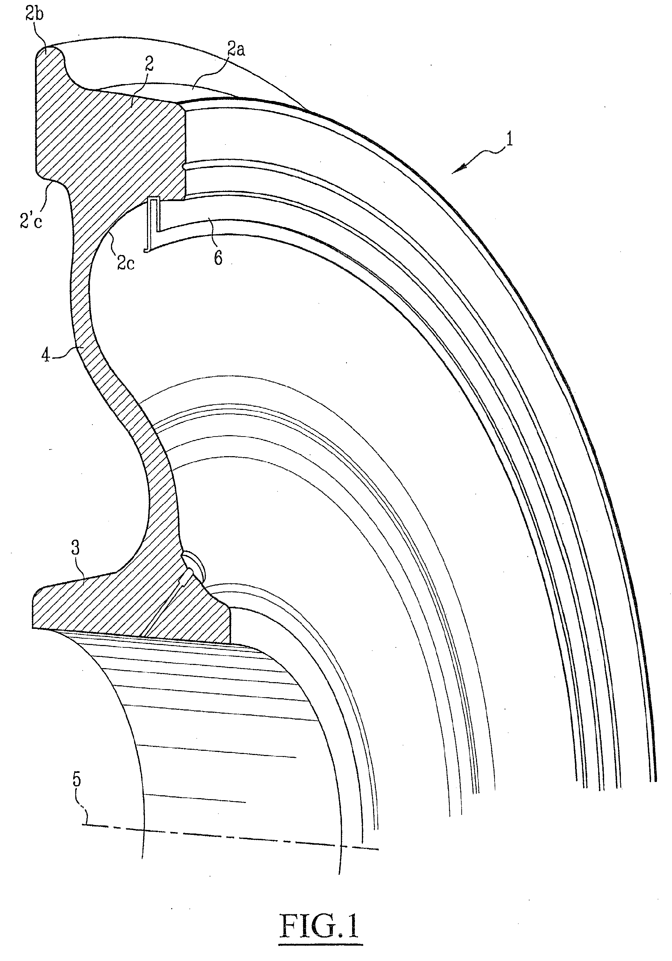

Sur la figure 1, on voit une roue de véhicule ferroviaire désignée de manière générale par le repère 1 qui comporte une jante 2, un moyeu 3 et une toile 4 joignant la jante au moyeu.

La roue 1 peut être réalisée sous forme monobloc.

La jante 2 comporte, sur sa partie externe périphérique, une surface de roulement 2a et un boudin 2b en saillie par rapport à la surface de roulement 2a sur le côté intérieur de la roue, c'est-à-dire le côté de la roue en contact avec la partie interne du rail sur laquelle la roue circule.

La jante 2 comporte de plus deux surfaces internes 2c et 2'c de raccordement à la toile 4 dirigées vers le centre de la roue par lequel passe l'axe de roulement 5 de la roue traversant le moyeu 3.

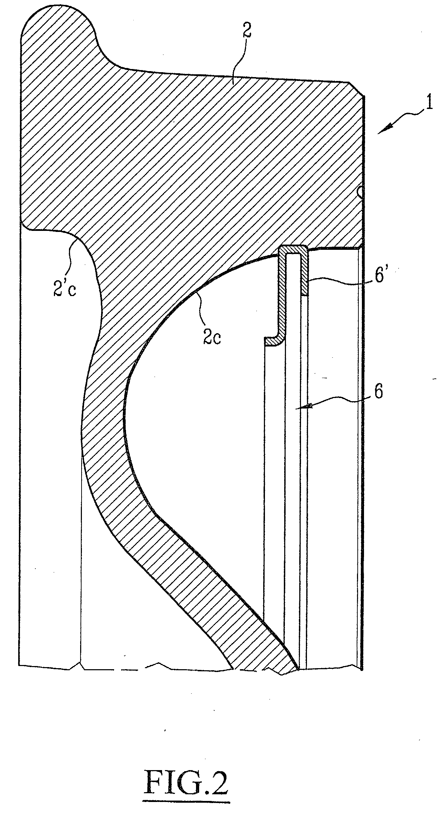

Suivant l'invention et, comme il est visible en particulier sur les figures 1 et 2, un élément de refroidissement 6 est fixé sur l'une des surfaces internes (2c) de la jante 2 constituant la surface interne de la jante dirigée vers le côté extérieur de la roue.

L'élément de refroidissement 6, de forme générale annulaire, présente une section transversale ou méridienne 6' (visible en particulier sur la figure 2) en forme d'U dissymétrique ayant une branche externe du côté extérieur de la roue, une branche interne et une partie commune aux deux branches par l'intermédiaire de laquelle l'élément de refroidissement 6 est fixé sur la surface interne 2c de la jante 2.

La branche externe de la section en U de l'élément 6 est plus courte que la branche interne qui est de plus repliée vers l'intérieur de la roue à son extrémité.

L'élément 6 est fixé sur la surface interne 2c de la jante 2 de la roue 1, de manière qu'il présente deux parties annulaires correspondant chacune à une branche de la section 6', en saillie par rapport à la surface 2c et dirigées vers l'axe 5 de la roue dont les surfaces externes, pendant le roulement de la roue, constituent des surfaces d'échange thermique avec l'atmosphère, de manière à évacuer de la chaleur transmise à la jante 2 pendant le roulement et plus particulièrement pendant un freinage.

La surface d'échange de l'élément de refroidissement 6 avec l'atmosphère extérieure est donc importante, ce qui permet d'évacuer vers l'extérieur de la roue un flux thermique important.

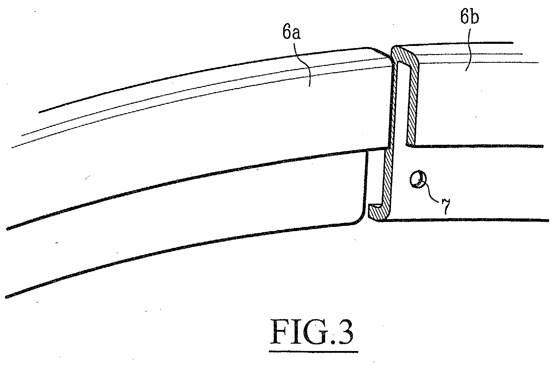

Comme il est visible sur la figure 3, l'élément 6 peut être constitué de parties successives telles que 6a, 6b, en forme de segments annulaires qui peuvent être raccordés l'un à l'autre, par exemple par des lames ou éclisses de raccordement qui sont fixées sur les éléments successifs 6a, 6b par des vis introduites dans des ouvertures telles que 7.

La partie de l'élément 6 (ou de segments successifs 6a, 6b, ... de l'élément 6) assemblée à la jante 2 est engagée dans une saignée annulaire de la jante usinée dans la surface intérieure 2c de la jante.

La partie de l'élément 6 ou des segments successifs 6a, 6b, ... engagée dans la jante et la saignée usinée dans la surface intérieure de la jante peuvent avoir une forme trapézoïdale pour assurer un maintien des segments successifs de l'élément 6 par un assemblage à queue d'arronde.

Bien entendu, la fixation de l'élément 6 dans la jante peut être assurée par tout autre moyen mécanique.

On pourrait aussi fixer l'élément 6 ou des segments successifs de l'élément 6 sur la jante, par précontrainte, en utilisant une pièce d'écartement des bords de l'élément 6 constituant une entretoise de maintien.

De préférence, l'élément de refroidissement 6 est réalisé en un métal présentant un coefficient d'échange thermique élevé et par exemple en un métal tel que l'aluminium ou les alliages d'aluminium ou encore tel que le cuivre ou les alliages de cuivre.

L'élément 6 pourrait être également réalisé en une nuance d'acier analogue ou différente de l'acier de la roue 1.

L'élément 6 peut présenter toute forme permettant d'augmenter la surface d'échange avec l'atmosphère ou de faciliter les échanges thermiques avec l'atmosphère.

En particulier, l'élément 6 peut présenter un nombre quelconque d'éléments annulaires en saillie par rapport à la surface interne de la jante 2.

L'élément 6 peut être réalisé sous une forme feuilletée et peut comporter des ondulations ou des ailettes favorisant les échanges thermiques pendant la rotation de la roue.

On peut prévoir de fixer également un élément de refroidissement tel que l'élément 6 sur la surface interne 2'c de la jante dirigée vers l'intérieur de la roue, soit comme seul élément de refroidissement de la roue, soit encore en combinaison avec un élément 6 fixé sur la surface interne 2c de la roue dirigée vers l'extérieur.

L'élément de refroidissement peut aussi constituer un atténuateur phonique jouant le rôle d'obstacle au bruit, dans la partie de la toile proche de la jante. Un second élément d'isolation phonique, fixé en vis-à-vis de la partie de la toile proche du moyeu, pourrait compléter cet obstacle. L'élément de refroidissement peut aussi jouer le rôle d'amortisseur acoustique.

L'invention s'applique à toute roue pour véhicule ferroviaire mais trouve des applications particulièrement intéressantes dans le cas de roues utilisées sur des véhicules ferroviaires sur lesquels on effectue des freinages de longue durée tels que des freinages de maintien, par exemple dans le cas de roues utilisées sur des véhicules ferroviaires circulant dans des zones de montagne.

## Revendications

1. Roue pour véhicule ferroviaire à capacité de refroidissement accrue, comprenant une jante (2), un moyeu (3) et une toile (4) joignant la jante (2) et le moyeu (3), de révolution autour d'un axe de roulement (5), **caractérisée par le fait qu'**un élément de refroidissement (6) de forme générale annulaire est fixé sur une surface interne (2c) de la jante (2) dirigée vers une partie centrale de la roue traversée par l'axe de roulement (5), de manière à présenter une surface d'échange thermique avec l'atmosphère en saillie par rapport à la jante (2) et dirigée vers la partie centrale traversée par l'axe de roulement (5).

2. Roue selon la revendication 1, **caractérisée par le fait que** l'élément de refroidissement (6) est réalisé en un métal ayant un coefficient d'échange thermique élevé, tel que l'aluminium ou un alliage d'aluminium.

3. Roue suivant l'une quelconque des revendications 1 et 2, **caractérisée par le fait que** l'élément de refroidissement (6) est constitué par au moins deux segments annulaires (6a, 6b) assemblés bout à bout, suivant une direction circonférentielle de la roue (1).

4. Roue selon l'une quelconque des revendications 1 à 3, **caractérisée par le fait que** l'élément de refroidissement (6) comporte une partie de liaison avec la jante (2) engagée dans une saignée annulaire de la surface interne (2c) de la jante (2).

5. Roue selon la revendication 4, **caractérisée par le fait que** la saignée annulaire de la surface interne (2c) de la jante (2) et la partie d'assemblage de l'élément de refroidissement (6) à la jante (2) présentent une section de forme trapézoïdale, de manière à assurer un assemblage en queue d'aronde entre l'élément de refroidissement (6) et la jante (2) de la roue (1).

6. Roue suivant l'une quelconque des revendications 1 à 5, **caractérisée par le fait que** l'élément de refroidissement (6) présente une section transversale ou méridienne comportant au moins deux parties annulaires en saillie par rapport à la surface interne (2c) de la jante (2), de manière à accroître la surface d'échange de l'élément de refroidissement (6) avec l'atmosphère.

7. Roue selon la revendication 6, **caractérisée par le fait que** la section transversale ou méridienne de l'élément de refroidissement (6) présente la forme d'un U dissymétrique.

8. Roue suivant l'une quelconque des revendications 1 à 7, **caractérisée par le fait que** l'élément de refroidissement (6) est réalisé sous une forme feuilletée pour accroître la surface d'échange thermique avec l'atmosphère.

9. Roue suivant l'une quelconque des revendications 1 à 5, **caractérisée par le fait que** l'élément de refroidissement (6) comporte sur sa surface d'échange thermique des ondulations ou des ailettes pour accroître la surface d'échange et augmenter les échanges thermiques avec l'atmosphère.
